# EUROPÄISCHE PATENTSCHRIFT

(11) **EP 2 121 283 B1**
(45) Veröffentlichungstag und Bekanntmachung des Hinweises auf die Patenterteilung: **17.11.2010**
(21) Anmeldenummer: 07846943.4
(22) Anmeldetag: 01.12.2007
(51) Int. Cl.: B29C 63/48, B32B 1/08, B05D 3/00

(54) **VERFAHREN ZUR HERSTELLUNG EINES METALLISCHEN LEITUNGSROHRS MIT FEST ANHAFTENDER KUNSTSTOFFUMMANTELUNG**
METHOD FOR THE PRODUCTION OF A METALLIC PIPELINE WITH FIRMLY ADHERENT PLASTICS SHEATHING
PROCÉDÉ DE FABRICATION D'UN TUBE CONDUCTEUR MÉTALLIQUE AVEC UN REVÊTEMENT DE PLASTIQUE FORTEMENT ADHÉSIF

(30) Priorität: 08.12.2006 DE 102006057884
(43) Veröffentlichungstag der Anmeldung: 25.11.2009
(73) Patentinhaber: Wieland-Werke AG, 89079 Ulm (DE)
(72) Erfinder: MERKEL, Till, 89231 Neu-Ulm (DE); WERNER, Rolf, 89278 Nersingen (DE); ZANKER, Max, 89257 Illertissen (DE)
(86) Internationale Anmeldenummer: PCT/EP2007/010454
(87) Internationale Veröffentlichungsnummer: WO 2008/067963

(56) Entgegenhaltungen:
- EP-A- 1 060 875
- EP-A- 1 352 934
- WO-A-2007/017508

## Beschreibung

Die Erfindung betrifft ein Verfahren zur Herstellung eines metallischen Leitungsrohrs mit fest anhaftender Kunststoffummantelung. Ein solches Verfahren ist aus EP-A-1352934 bekannt.

Bei derart isolierten Leitungsrohren handelt es sich üblicherweise um Rohre aus Metall- und Kunststoffkomponenten, die stoffschlüssig miteinander verbunden sind. Beispielsweise ist aus der deutschen Offenlegungsschrift 1 675 338 ein Leitungsrohr für Flüssigkeiten und Gase bekannt, das aus einem dünnwandigen Kupferrohr mit einem fest anhaftenden Mantel aus thermoplastischem Polymer besteht. Der Mantel kann durch Extrusion oder durch Aufwickeln von Kunststoffbändern hergestellt werden. Die Haftung zwischen Kunststoff und Metall entsteht durch direkte Verklebung unter Einsatz eines Thermoplasten als Hülle oder durch klebefähige Bänder. In diesem Zusammenhang werden modifizierte Polyethylene, die aus Comonomeren bestehen und Acrylat als funktionelle Gruppe enthalten, welche für die gute Haftung wirksam ist.

Eine Weiterentwicklung eines dünnwandigen Kupfer- oder Stahlrohres mit fest haftendem Kunststoffmantel ist auch aus WO 2006/005297 A1 bekannt. Zur Verbesserung der Haftung zwischen Metall und Kunststoff wird die Metalloberfläche mit Reagenzien als Haftvermittler behandelt, deren Basis Benzotriazol sein kann. Dabei wird auch vorgeschlagen, die Hafteigenschaften durch eine Verzinnung der Außenoberfläche zu verbessern.

Des Weiteren ist beispielsweise aus der Patentschrift EP 0 794 376 B1 ein Verbundrohr bekannt, das aus einer innen liegenden Kupferfolie mit je einer Haftvermittlerschicht und einer inneren und äußeren Polymer Deckschicht besteht. Dabei ist die innen liegende Kupferfolie innen und außen mit einem anorganischen Belag versehen, der die Ionenbildung bzw. -wanderung verhindern soll. Der Belag wird durch Tauchen oder durch galvanisches Abscheiden aufgebracht und besteht bevorzugt aus Nickel.

Im weiteren Schrifttum ist die Haftung zwischen Metall und Kunststoff sowie Maßnahmen zu deren Beeinflussung häufig diskutiert. Auch eine Verbesserung der mechanischen Kopplung zwischen Kunststoff und Metall durch Aufrauen der Oberfläche oder das gezielte Einbringen von Riefen ist beschrieben. Die Haftung auf der Metalloberfläche wird auch durch Vorbehandlung mit nicht oxidierenden Säuren verbessert, indem schlecht haftende Oxidschichten entfernt werden. Gleichzeitig wird eine muldenförmige Mikrorauhigkeit erzeugt. Bei Einsatz oxidierender Säuren können zusätzlich noch gut haftende Oxidschichten spezifischer Dicke aufgebracht werden. Diese weisen allerdings durch die physikalische Struktur des Metallgitters und die Natur der chemischen Bindungen zwischen verschiedenen Atomen starke Polaritäten auf. Dadurch haften unpolare Polymere, wie beispielsweise Polyethylen, sehr schlecht auf Metallen. Haftvermittler, die in einem unpolaren Polymergerüst polare funktionelle Gruppen, beispielsweise lonomere enthalten, werden als Zwischenschicht eingesetzt. Über die chemischen Vorgänge des Bindungsrnechanismus zwischen Haftvermittler und polaren Metalloberflächen herrscht allerdings keine vollständige Klarheit. Vermutet werden Bindungen, deren Bindungsenergien zwischen den kovalenten Bindungen organischer Moleküle und den Ionenbindungen von Salzen angesiedelt sind. Unabhängig davon, welcher dieser beiden Grenzfälle die chemischen Realitäten genauer beschreibt, ist es unstrittig, dass die Metalloberflächen zum Mindesten teilweise oxidiert sein müssen, um die Haftung zu verbessern. Auf Grundlage dieser Überlegung werden beispielsweise Metalloberflächen chromatisiert, bevor sie in einem Lackierprozess mit einer organischen Beschichtung versehen werden.

Aus diesen Ausführungen ergeben sich damit Anforderungen an einen Prozess, durch den eine Rohroberfläche aus Metall mit einer fest haftenden Polymerbeschichtung versehen werden soll.

Der Erfindung liegt deshalb die Aufgabe zugrunde, ein Verfahren zur Verbesserung der Haftung einer Kunststoffummantelung auf einem metallischen Leitungsrohr anzugeben.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt ein Verfahren zur Herstellung eines metallischen Leitungsrohrs mit fest anhaftender Kunststoffummantelung ein, wobei
- mittels einer Plasmabehandlung oder mittels einer Gasbrennerflamme eine aktivierte Metallrohroberfläche erzeugt wird, wobei die Einwirkungsdauer auf die Oberfläche weniger als 3 Sekunden beträgt,
- eine Kunststoffummantelung auf die blanke aktivierte Metallrohroberfläche aufgebracht wird, und
- zum Zeitpunkt des Aufbringens der Ummantelung die Temperatur der Metallrohroberfläche unter 80°C beträgt.

Die Erfindung geht dabei auch von der Überlegung aus, dass sich das Herstellungsverfahren des Leitungsrohrs mit Kunststoffummantelung gegenüber den vorgeschalteten Verfahrensschritten zur Rohrvorbereitung entkoppeln lässt. Zur Rohrvorbereitung gehören üblicherweise das Abspulen des gewickelten Rohres bzw. seine Förderung aus einem Korb oder einem vorgeschalteten Fertigungsschritt, eine Glühbehandlung sowie eine Abkühlung, gegebenenfalls mit einer nachfolgenden Kaltumformung. Durch das erfindungsgemäße Verfahren wird die Metallrohroberfläche unmittelbar vor dem Aufbringen der Ummantelung aktiviert und für eine gute Haftfähigkeit vorbereitet.

Die Einwirkung einer Gasbrennerflamme auf die Oberfläche mit einer Prozessdauer unter 3 Sekunden wird als Temperaturflash ausgeführt. Durch kurze Kontaktzeiten wird eine Aufheizung der Oberfläche vermieden, der Temperaturanstieg kann dabei bei entsprechendem Vorschub des Rohres unter 30 °C liegen. Sogar bei Prozessdauern von unter einer halben Sekunde können bereits ausreichend aktivierte Oberflächen erzielt werden.

Die Bereitstellung einer metallisch blanken und aktivierten Oberfläche lässt sich mittels einer Plasmavorbehandlung zuverlässig und weitgehend unabhängig von der Fertigungsgeschwindigkeit realisieren. Damit ist eine große Bandbreite von Rohrvormaterial in Körben, gespult oder in geraden Längen einsetzbar, sofern die Ausgangsmaterialien bereits gewissen Mindestanforderungen an die Oberflächenqualität genügen. Die sich einstellende metallisch blanke und aktivierte Oberfläche ist operationell über ein Messverfahren und dessen Empfindlichkeit quantifizierbar. Als Kriterien zur Messung der Oberflächengüte kann hierzu die Oberflächenspannung als Maß für die Sauberkeit herangezogen werden. Weiterhin sollte auf der Oberfläche kein über den Filmtest nachweisbarer Kohlenstofffilm vorhanden sein. Eine Verschmutzung mit Partikeln lässt sich im Prozess einfach über einen Wischtest mit einem weißen Stofftuch prüfen. Rohroberflächen, die den vorgegebenen Anforderungen genügen, sind als Vormaterial für die Ummantelung mit einem fest haftenden Kunststoffmantel geeignet und können direkt weiterverarbeitet werden. Die Bereitstellung einer metallisch blanken aktivierten Oberfläche ist auch eine wichtige Voraussetzung für die Entkopplung der Prozessfolge.

Die oxidative Behandlung der Oberflächen unter Ausbildung einer Oxidschicht ist nicht erforderlich. Allerdings hat sich eine Aktivierung der Oberfläche durch einen Gasbrenner, insbesondere mit Ringdüsen, in der Anwendung bewährt. Durch die Aktivierung wird die Reaktivität der Oberfläche erhöht, so dass die Reaktion mit dem Kunststoffmaterial der Ummantelung unmittelbar nach dessen Aufbringung beginnt und bereits nach kurzer Reaktionszeit zur Ausbildung eines guten Haftverbunds zwischen Metall und Kunststoff führt. Eine thermische Aktivierung ist mit einem Gasbrenner möglich, der mit einem Sauerstoff- bzw. Luftüberschuss betrieben wird. Dadurch können sehr hohe Temperaturen über 500 °C erreicht werden, die jedoch nur kurzzeitig oberflächennah wirken. Eine ähnliche aktivierende Wirkung wird entsprechend einer Behandlung mit physikalischen Verfahren der vorstehend beschriebenen Plasmabehandlung beobachtet. Die zu beobachtenden günstigen Effekte können im Zusammenhang mit einer Mikroätzung der Oberfläche stehen.

Der besondere Vorteil besteht darin, dass durch die mittels einer Plasmabehandlung oder einer Behandlung mit einer Gasbrennerflamme die Metalloberfläche so aktiviert wird, dass beim unmittelbar nachfolgenden Prozess eine Ummantelung mit besonders guter Haftung aufgebracht werden kann.

In bevorzugter Ausgestaltung der Erfindung kann bei Verwendung einer Gasbrennerflamme als Brennergas Methan, Propan oder Butan mit Luftüberschuss verwendet werden. Vorteilhafterweise kann bei Verwendung einer Gasbrennerflamme das Brennergas einen 20 - 30fachen Luftüberschuss aufweisen.

In vorteilhafter Ausgestaltung der Erfindung kann zum Zeitpunkt des Aufbringens der Ummantelung die Temperatur der Metallrohroberfläche von Raumtemperatur bis maximal 50°C betragen. Besonders gute Haftungsergebnisse werden immer dann erzielt, wenn das aktivierte Rohr mit einer definierten und relativ geringen Oberflächentemperatur in den Extruder eintritt.

In bevorzugter Ausführungsform der Erfindung kann vor dem Aufbringen der Ummantelung die Metallrohroberfläche mit einem Haftvermittler versehen werden. Um den Haftvermittler und den Mantelwerkstoff in einem Arbeitsschritt auf das Rohr aufzubringen, sind verschiedene Kombinationen von Verfahrensschritten möglich, die sich im Wesentlichen durch die Rohrvorbereitung unmittelbar vor dem Eintritt in einen Extruder unterscheiden. Der Haftvermittler wird als dünner Film auf die Oberfläche aufgetragen. Die Verarbeitungstemperatur richtet sich nach Art und Zusammensetzung des Haftvermittlers, dabei spielen die thermische Beständigkeit und auch der Schmelzpunkt der Polymermatrix eine wesentliche Rolle. Der Haftvermittler wird als Film auf die Oberfläche aufgetragen, wobei diese optimal benetzt wird und somit die maximal für chemische Reaktionen zwischen den funktionellen Gruppen und dem Metall zur Verfügung stehende tatsächliche Oberfläche ausnutzt.

Vorteilhafterweise können als Haftvermittler Polymere verwendet werden, deren Matrix beispielsweise durch Maleinsäureanhydrid oder lonomere funktionalisiert wurde. Auch können dem Haftvermittler weitere aktivierend wirkende Substanzen als Bestandteil beigemischt werden. Hierfür eignen sich insbesondere Peroxide auf organischer oder auch auf anorganischer Basis.

Bei geeigneter Kombination von Haftvermittler und Mantelwerkstoff wird der Mantelwerkstoff so heiß aufgebracht, dass er eine Aufheizung des Haftvermittlers bewirkt und den Zerfall des Peroxids auslöst. Dieses oxidiert dann die Oberfläche. Über die Konzentration des Peroxids kann das Ausmaß der Oxidation der Oberfläche gesteuert werden. Die Dosierung des Peroxids muss genau erfolgen, um ein quantitatives Abreagieren zu gewährleisten. Gleichzeitig darf die Konzentration nicht so hoch sein, dass eine oxidative Schädigung der Polymermatrix auftritt. Daher hat es sich als vorteilhaft erwiesen, dem Haftvermittler eine der Peroxidmenge äquivalente Menge an Antioxidationsmitteln beizumischen. So kann die oxidative Wirkung des Haftvermittlers auf die Kontaktfläche Metall/ Polymer beschränkt und eine gleichzeitige oxidative Schädigung des Polymers weitgehend unterbunden werden.

In bevorzugter Ausführungsform der Erfindung kann der Haftvermittler als Folie aufgebracht werden. Das Aufbringen des Haftvermittlers und das Aufbringen der Ummantelung kann vorteilhafterweise über zwei zeitlich und örtlich unabhängige Prozesse erfolgen. Hierdurch werden die einzelnen Prozessschritte voneinander entkoppelt.

Bei der Beschichtung von Kupferoberflächen hat sich gezeigt, dass sich bei Werten oberhalb 40 mN/m bereits eine sichere Haftung einstellt. In weiterer bevorzugter Ausführungsform kann die aktivierte Metallrohroberfläche eine Oberflächenspannung von 45 bis 75 mN/m aufweisen, besonders bevorzugt von 55 bis 75 mN/m. Die Oberflächenenergie von Metallen und Polymeren lässt sich leicht über Testtinten nach DIN 53364 messen.

## Patentansprüche

1. Verfahren zur Herstellung eines metallischen Leitungsrohrs mit fest anhaftender Kunststoffummantelung, wobei
- mittels einer Plasmabehandlung oder mittels einer Gasbrennerflamme eine aktivierte Metallrohroberfläche erzeugt wird, wobei die Einwirkungsdauer auf die Oberfläche weniger als 3 Sekunden beträgt,
- eine Kunststoffummantelung auf die aktivierte Metallrohroberfläche aufgebracht wird, und
- zum Zeitpunkt des Aufbringens der Ummantelung die Temperatur der Metallrohroberfläche unter 80°C beträgt.

2. Verfahren nach Anspruch 1, **dadurch gekennzeichnet, dass** bei Verwendung einer Gasbrennerflamme als Brennergas Methan, Propan oder Butan mit Luftüberschuss verwendet wird.

3. Verfahren nach Anspruch 2, **dadurch gekennzeichnet, dass** das Brennergas einen 20 - 30fachen Luftüberschuss aufweist.

4. Verfahren nach einem der Ansprüche 1 bis 3, **dadurch gekennzeichnet, dass** zum Zeitpunkt des Aufbringens der Ummantelung die Temperatur der Metallrohroberfläche von Raumtemperatur bis maximal 50 °C beträgt.

5. Verfahren nach einem der Ansprüche 1 bis 4, **dadurch gekennzeichnet, dass** vor dem Aufbringen der Ummantelung die Metallrohroberfläche mit einem Haftvermittler versehen wird.

6. Verfahren nach Anspruch 5, **dadurch gekennzeichnet, dass** als Haftvermittler mit Maleinsäureanhydrid oder lonomere funktionalisierte Polymere verwendet werden.

7. Verfahren nach Anspruch 5 oder 6, **dadurch gekennzeichnet, dass** der Haftvermittler als Folie aufgebracht wird.

8. Verfahren nach Anspruch 5, 6 oder 7, **dadurch gekennzeichnet, dass** das Aufbringen des Haftvermittlers und das Aufbringen der Ummantelung über zwei zeitlich und örtlich unabhängige Prozesse erfolgen.

9. Verfahren nach einem der Ansprüche 1 bis 3, **dadurch gekennzeichnet, dass** die aktivierte Metallrohroberfläche eine Oberflächenspannung von 45 bis 75 mN/m aufweist.

10. Verfahren nach Anspruch 9, **dadurch gekennzeichnet, dass** die aktivierte Metallrohroberfläche eine Oberflächenspannung von 55 bis 75 mN/m aufweist.

## Claims

1. A method for the production of a metallic conduit pipe with firmly adherent plastics sheath, wherein
- an activated metal pipe surface is produced by means of a plasma treatment or by means of a gas burner flame, wherein the duration of action on the surface is less than 3 seconds,
- a plastics sheath is applied to the activated metal pipe surface, and
- at the time of application of the sheath the temperature of the metal pipe surface is below 80°C.

2. A method according to claim 1, **characterised in that**, when a gas burner flame is used, methane, propane or butane with an excess of air is used as the burner gas.

3. A method according to claim 2, **characterised in that** the burner gas has a 20- to 30-fold excess of air.

4. A method according to any one of claims 1 to 3, **characterised in that** at the time of application of the sheath the temperature of the metal pipe surface is from room temperature to a maximum of 50°C.

5. A method according to any one of claims 1 to 4, **characterised in that** before application of the sheath the metal pipe surface is provided with an adhesion promoter.

6. A method according to claim 5, **characterised in that** polymers functionalised with maleic anhydride or ionomers are used as adhesion promoter.

7. A method according to claim 5 or 6, **characterised in that** the adhesion promoter is applied in the form of a film.

8. A method according to claim 5, 6 or 7, **characterised in that** application of the adhesion promoter and application of the sheath are effected by two processes that are independent of each other in time and place.

9. A method according to any one of claims 1 to 3, **characterised in that** the activated metal pipe surface has a surface tension of from 45 to 75 mN/m.

10. A method according to claim 9, **characterised in that** the activated metal pipe surface has a surface tension of from 55 to 75 mN/m.

## Revendications

1. Procédé de fabrication d'un tube de conduite métallique comprenant un enrobage en matière plastique y adhérant de manière résistante,
selon lequel
- on produit, au moyen d'un traitement au plasma ou au moyen d'une flamme de brûleur ou chalumeau à gaz, une surface de tube en métal activée, la durée d'action sur ladite surface étant inférieure à 3 secondes,
- on applique sur la surface de tube en métal activée, un enrobage en matière plastique, et
- à l'instant de l'application de l'enrobage, la température de la surface de tube en métal se situe en-dessous de 80°C.

2. Procédé selon la revendication 1, **caractérisé en ce que** dans le cas de l'utilisation d'une flamme de brûleur ou chalumeau à gaz, on utilise, en guise de gaz de combustion du brûleur ou chalumeau, du méthane, du propane ou du butane, avec un excès d'air.

3. Procédé selon la revendication 2, **caractérisé en ce que** le gaz de combustion du brûleur ou chalumeau présente un excès d'air de 20 à 30 fois.

4. Procédé selon l'une des revendications 1 à 3, **caractérisé en ce qu'**à l'instant de l'application de l'enrobage, la température de la surface de tube en métal se situe à une valeur allant de la température ambiante jusqu'au maximum à 50°C.

5. Procédé selon l'une des revendications 1 à 4, **caractérisé en ce qu'**avant l'application de l'enrobage, on munit la surface de tube en métal d'un agent de pontage ou d'accrochage.

6. Procédé selon la revendication 5, **caractérisé en ce que** l'on utilise en guise d'agent de pontage ou d'accrochage, des polymères fonctionnalisés avec de l'anhydride d'acide maléique ou des ionomères.

7. Procédé selon la revendication 5 ou la revendication 6, **caractérisé en ce que** l'agent de pontage ou d'accrochage est appliqué sous forme de film ou de feuille.

8. Procédé selon la revendication 5, la revendication 6 ou la revendication 7, **caractérisé en ce que** l'application de l'agent de pontage ou d'accrochage et l'application de l'enrobage s'effectuent par deux processus qui sont indépendants dans le temps et indépendants quant à leur localisation.

9. Procédé selon l'une des revendications 1 à 3, **caractérisé en ce que** la surface de tube en métal activée présente une tension superficielle de 45 à 75 mN/m.

10. Procédé selon la revendication 9, **caractérisé en ce que** la surface de tube en métal activée présente une tension superficielle de 55 à 75 mN/m.
